# FASCICULE DE BREVET EUROPEEN

(11) **EP 0 760 909 B1**
(45) Date de publication et mention de la délivrance du brevet: **30.09.1998**
(21) Numéro de dépôt: 95915289.3
(22) Date de dépôt: 27.04.1995
(51) Int. Cl.: F16B 21/18, G02C 5/22, F16C 11/04, F16C 11/02

(54) **DISPOSITIF D'ASSEMBLAGE D'AU MOINS DEUX PIECES ET SON UTILISATION**
VORRICHTUNG ZUR BEFESTIGUNG VON MINDESTENS ZWEI TEILEN UND DEREN VERWENDUNG
DEVICE FOR JOINING AT LEAST TWO COMPONENTS, AND USE THEREOF

(30) Priorité: 04.05.1994 CH 1406/94
(43) Date de publication de la demande: 12.03.1997
(73) Titulaire: ETABLISSEMENTS SARRAN S.A., 39400 Morez (FR); Petignat, Maurice, 2300 La Chaux-de-Fonds (CH)
(72) Inventeur: PETIGNAT, Maurice, CH-2300 La Chaux-de-Fonds (CH)
(74) Mandataire: Micheli & Cie
(86) Numéro de dépôt international: IB9500303
(87) Numéro de publication internationale: WO9530838

(56) Documents cités:
- BE-A- 469 209
- FR-A- 1 212 655
- FR-A- 2 623 920
- US-A- 2 926 381

## Description

La présente invention a pour objet une monture de lunettes et un dispositif d'articulation de ses branches sur sa partie faciale au moyen de charnières dont l'axe est constitué par une vis prenant dans l'un des charnons d'un des éléments de la charnière et traversant un passage ménagé dans un charnon de l'autre élément.

Les dispositifs d'articulation de branches de lunettes du type susmentionné sont connus en soi. Le brevet USA No 2.926.381 décrit une disposition de ce genre.

Le but de la présente invention est d'améliorer la sécurité de tels dispositifs d'articulation assurant un blocage de la vis d'assemblage.

Ce but est atteint grâce au fait que la vis dépasse le charnon dans lequel elle est vissée, cette vis présentant, située au ras de la face dudit charnon, sur laquelle elle déborde,une gorge annulaire dans laquelle est engagé un circlip assurant le verrouillage de la vis empêchant que cette dernière ne se desserre intempestivement.

Il est à remarquer que le brevet français No 1.212.655 et la demande de brevet français No 2.623.920 décrivent des dispositifs d'articulation de branches de lunettes dans lesquels l'axe de la charnière est constitué par une tige lisse bloquée à l'aide d'un circlip.

Une telle disposition est d'ailleurs bien connue dans le domaine de la mécanique générale, comme suffirait à le prouver le brevet belge No 469.209 dans lequel, de surcroît, le circlip de blocage d'un axe est cambré de façon à produire un rappel élastique de cet axe.

Un autre but de l'invention consiste à réaliser un tel dispositif d'articulation qui soit efficace malgré les variations de position que peut présenter la vis constituant l'axe d'articulation lorsque le serrage désiré est réalisé.

Cet autre but est atteint grâce au fait que la largeur de la gorge annulaire ménagée dans la tige de la vis est telle que cette gorge soit partiellement située à l'intérieur du charnon de l'élément de la charnière dans lequel la vis est vissée, de telle manière que, selon la position longitudinale de ladite vis par rapport audit charnon, des circlips d'épaisseurs différentes puissent être utilisés pour que soit assuré un blocage efficace de la vis.

Le dessin représente, à titre d'exemple, une forme d'exécution de l'objet de l'invention.

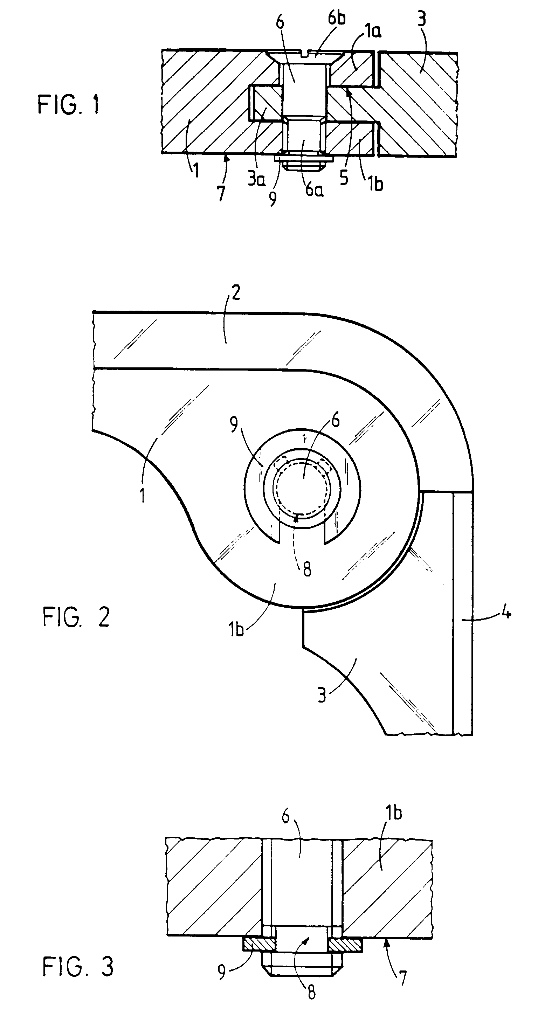

La fig. 1 est une coupe axiale d'une charnière pour branche de lunettes.
La fig. 2 est une vue en plan, de dessous, de cette charnière, à plus grande échelle, et
La fig. 3 est une coupe d'un détail de cette charnière, à l'échelle de la fig. 2.

La charnière représentée comprend une semelle 1, destinée à se fixer à la partie faciale 2 d'une monture de lunettes, et une semelle 3 se fixant à une branche 4 de ladite monture.

Une encoche 5 est ménagée dans la semelle 1, formant ainsi deux charnons 1a et 1b entre lesquels est engagée une saillie 3a de la semelle 3, formant charnon, le tout constituant ainsi la charnière d'articulation de la branche 4 sur la partie faciale 2 de la monture de lunettes.

Une vis à portée 6 traverse les deux charnons 1a et 1b ainsi que le charnon 3a de la charnière, son extrémité, désignée par 6a, filetée, se vissant dans le charnon 1b.

Cette vis dépasse le charnon 1b, sa partie débordante présentant, au ras de la face externe, désignée par 7, du charnon 1b, une gorge annulaire 8 située au ras de ladite face 7. Une rondelle-pincette 9, connue sous le nom de circlip, est engagée dans la gorge 8 et prend appui sur la face 7 du charnon 1b pour assurer que la vis 6, dont la tête, désignée par 6b, est bloquée contre le charnon 1a, ne risque pas de se desserrer intempestivement.

La hauteur de la gorge 8 est telle que cette dernière se situe, partiellement, à l'intérieur du charnon 1b. Il résulte de cet agencement que si l'articulation prend du jeu, par exemple à la suite d'une usure des éléments qui la composent, ce qui est fréquemment le cas des charnières de montures de lunettes, qui sont très sollicitées, il est possible de rattraper ce jeu en remplaçant le circlip 9 par un circlip d'une épaisseur légèrement supérieure.

Ainsi, la présente disposition résoud à la fois le problème du desserrage intempestif d'une vis d'assemblage de deux éléments et celui du rattrapage d'un jeu éventuel.

L'invention n'est pas limitée au cas décrit et représenté des charnières de lunettes. Elle pourra s'appliquer à tout assemblage par vis, même à l'assemblage d'éléments qui ne sont pas articulés l'un sur l'autre, quand bien même, dans ce cas, le risque d'apparition de jeu est évidemment plus faible.

L'invention pourra également s'appliquer au cas où la vis ne prend pas directement dans l'une des pièces de l'assemblage mais au cas où elle est munie d'un écrou. La vis dépassera alors ledit écrou et c'est contre celui-ci que viendra prendre appui le circlip.

## Revendications

1. Monture de lunettes et dispositif d'articulation de ses branches (4) sur sa partie faciale (2) au moyen de charnières dont l'axe est constitué par une vis (6) prenant dans l'un (1b) des charnons d'un des éléments (1) de la charnière et traversant un passage ménagé dans un charnon (3a) de L'autre élément (3), caractérisée par le fait que ladite vis (6) dépasse le charnon (1b) dans lequel elle est vissée, cette vis présentant, située au ras de la face (7) dudit charnon (1b), sur lacuelle elle déborde, une gorge annulaire (8) dans laquelle est engagé un circlip (9) assurant le verrouillage de la vis (6) empêchant que cette dernière ne se desserre intempestivement.

2. Monture de lunettes suivant la revendication 1, caractérisée par le fait que la largeur de ladite gorge (8) est telle que celle-ci est partiellement située à l'intérieur du charnon (1b) de la charnière dans lequel la vis est vissée, de telle manière que, selon la position longitudinale de ladite vis (6) par rapport audit charnon (1b), des circlips (9) d'épaisseurs différentes puissent être utilisés pour que soit assuré un verrouillage efficace de la vis.

## Patentansprüche

1. Brillengestell und Vorrichtung zur Gelenkverbindung seiner Bügel (4) am Gestellvorderteil (2) durch Scharniere, deren Achse aus einer Schraube (6) besteht, die einen (1*b*) der Scharnierflügel des einen Elements (1) des Scharniers greift und durch einen in einen Scharnierflügel (3*a*) des anderen Elements (3) eingelassenen Durchgang hindurchgeht, dadurch gekennzeichnet, dass die benannte Schraube (6) über den Scharnierflügel (1*b*), in den sie eingeschraubt ist, hinausgeht und bündig mit der Seite (7) des benannten Scharnierflügels (1*b*), über die sie hinausgeht, eine ringförmige Rille (8) aufweist, in die ein Sicherungsring (9) eingreift, der die Arretierung der Schraube (6) sicherstellt und verhindert, dass letztere sich zu unpassender Zeit lockert.

2. Brillengestell gemäss Anspruch 1, dadurch gekennzeichnet, dass die Weite der benannten Rille (8) so bemessen ist, dass sich die Rille teilweise im Inneren des Scharnierflügels (1*b*) des Scharniers befindet, in den die Schraube eingeschraubt ist, so dass je nach der Längsstellung der benannten Schraube (6) bezüglich des benannten Scharnierflügels (1*b*) Sicherheitsringe (9) verschiedener Dicken verwendet werden können, damit eine wirksame Arretierung der Schraube sichergestellt wird.

## Claims

1. A spectacles frame and an articulation device of its sides (4) on its facial portion (2) by means of hinges the axis of which is constituted by a screw (6) screwed in one (1b) of the knuckles of one of the elements (1) of the hinge and which passes through a passage provided in a knuckle (3a) of the other element (3) in which the said screw (6) extends beyond the knuckle (1b) in which it is screwed, this screw presenting, situated flush with the face (7) of the said knuckle (1b), on which it protrudes, an annular groove (8) in which is engaged a circlip (9) producing the locking of the screw (6) preventing the screw to be untimely loosened.

2. A spectacles frame as claimed in claim 1, in which the width of the said groove (8) is such that the groove is partillay situated inside the knuckle (1b) of the hinge in which the screw is screwed, in such a way that , according to the longitudinal position of the said screw (6) with respect to the said knuckle (1b), circlips (9) of several thicknesses can be used so as to produce an efficient locking of the screw.
